# FASCICULE DE BREVET EUROPEEN

(11) **EP 3 581 416 B1**
(45) Date de publication et mention de la délivrance du brevet: **31.03.2021**
(21) Numéro de dépôt: 19180367.5
(22) Date de dépôt: 14.06.2019
(51) Int. Cl.: B60K 1/02, F16H 3/089

(54) **DISPOSITIF DE TRANSMISSION, NOTAMMENT POUR VÉHICULE ÉLECTRIQUE**
GETRIEBEVORRICHTUNG, INSBESONDERE FÜR ELEKTROFAHRZEUG
TRANSMISSION DEVICE, PARTICULARLY FOR ELECTRIC VEHICLE

(30) Priorité: 15.06.2018 FR 1855281
(43) Date de publication de la demande: 18.12.2019
(73) Titulaire: VALEO EMBRAYAGES, 80009 Amiens (FR)
(72) Inventeur: MOLLIER, Christophe, 95892 CERGY PONTOISE (FR); JIVAN, Camelia, 95892 CERGY PONTOISE (FR)
(74) Mandataire: Vincent, Catherine Marie Marguerite

(56) Documents cités:
- EP-A2- 2 436 950
- DE-A1-102010 024 147
- FR-A1- 3 053 007
- GB-A- 757 515
- US-A1- 2004 144 576
- US-B2- 9 951 850

## Description

La présente invention se rapporte au domaine des transmissions à au moins deux rapports de transmission destinées à être utilisées sur des véhicules automobiles électriques. On entend par véhicule automobile électrique au sens de l'invention tous les véhicules qui utilisent une machine électrique en tant que moteur principal, la machine électrique étant la seule machine motrice (véhicules purement électriques) ou associée à un moteur à combustion interne (véhicules hybrides).

Les transmissions à plus d'un rapport, en particulier les transmissions à deux rapports, sont utilisées pour équiper des véhicules électriques et permettent un fonctionnement de la machine électrique à sa vitesse de rotation optimale, c'est-à-dire à la vitesse de rotation correspondant au rendement maximal de la machine électrique. Cet avantage s'applique à la fois à un mode de fonctionnement moteur, dans lequel la machine électrique fonctionne en tant que moteur pour générer la puissance nécessaire au déplacement du véhicule, et à un mode de fonctionnement générateur, dans lequel la machine électrique fonctionne en tant générateur pour convertir l'énergie cinétique du véhicule en énergie électrique.

Afin de limiter les coûts et afin de compenser d'éventuelles variations du couple lors de changement de rapport, il est connu d'utiliser une transmission comportant deux machines électriques identiques. Une telle transmission est par exemple connue du document EP 2 529 967

Des dispositifs de transmission à au moins deux rapports de transmission sont par exemple connus des documents GB 757 515 A et US 2004/144576 A1.

Il existe actuellement un besoin de réduire encore les coûts d'une telle transmission.

A cet effet, l'invention propose un dispositif de transmission à au moins deux rapports de transmission, notamment pour véhicule électrique, selon la revendication 1.

Les caractéristiques techniques de chaque machine électrique peuvent notamment être l'une ou plusieurs des caractéristiques suivantes : la tension d'alimentation, le courant nominal, la puissance nominale, le nombre de phases, le nombre de pôles, le rapport de la vitesse de rotation sur la tension d'alimentation, la vitesse de rotation nominale, le couple nominal, l'inertie du rotor, le courant maximal, la vitesse de rotation maximale, le couple maximal, le rendement, le type d'aimant permanent utilisé, les dimensions (diamètre, longueur, largeur), la masse.

Le rapport de transmission est le rapport entre la vitesse de rotation d'entrée, c'est-à-dire la vitesse de rotation du rotor de la machine électrique concernée dans le cas de l'invention, et la vitesse de rotation en sortie du dispositif de transmission.

L'utilisation de deux machines électriques présentant des caractéristiques techniques différentes permet d'utiliser une première machine électrique assurant par exemple la propulsion du véhicule dans la majorité des cas de fonctionnement, et d'utiliser la deuxième machine électrique en complément, en cas de besoin d'un couple accru, par exemple lors d'une phase d'accélération et/ou pour compenser une rupture de couple lors du changement de rapport de vitesses sur la première machine électrique. Dans un tel cas, la deuxième machine électrique peut présenter un coût plus faible que la première machine électrique et/ou des caractéristiques techniques dégradées par comparaison avec les caractéristiques techniques de la première machine électriques.

L'arbre primaire et l'arbre tertiaire sont aptes à être reliés par l'intermédiaire d'un premier engrenage correspondant à un premier rapport de transmission ou par l'intermédiaire d'un deuxième engrenage correspondant à un deuxième rapport de transmission, des moyens de couplage permettant de sélectionner ledit rapport de transmission en activant ou désactivant l'un ou l'autre desdits premier et deuxième engrenages.

L'activation simultanée du premier engrenage et du deuxième engrenage par les moyens de couplage permet de bloquer le dispositif de transmission, notamment l'arbre tertiaire.

Le premier engrenage et le deuxième engrenage comprennent chacun un pignon fou porté par l'arbre primaire ou l'arbre secondaire, chaque pignon fou coopérant avec un moyen de couplage, tel qu'un synchronisateur, apte à le solidariser en rotation avec l'arbre primaire ou secondaire qui le porte.

Les premier et deuxième rapports de transmission peuvent être des rapports de transmission différents.

L'activation d'un engrenage permet de transmettre du couple d'un arbre à l'autre, au travers de l'engrenage concerné. La désactivation d'un engrenage permet d'empêcher une telle transmission de couple.

L'arbre secondaire et l'arbre tertiaire sont aptes à être reliés par l'intermédiaire d'un troisième engrenage correspondant à un troisième rapport de transmission.

Le troisième rapport de transmission peut être différent des premier et deuxième rapports de transmission. En variante, le troisième rapport de transmission peut être égal à l'un des premier et deuxième rapports de transmission.

Le premier rapport de transmission peut être compris entre 26 et 10. Le deuxième rapport de transmission peut être compris entre 12 et 5. Le troisième rapport de transmission peut être compris entre 19 et 8.

Le dispositif de transmission peut comporter des moyens de couplage aptes à activer ou désactiver le troisième engrenage.

Les moyens de couplage peuvent comporter un actionneur piloté.

La première machine électrique et la deuxième machine électrique peuvent être situées de part et d'autre des engrenages.

La première machine électrique et la deuxième machine électrique peuvent être situées d'un même côté par rapport aux engrenages, de façon à réduire l'encombrement selon la direction parallèle à l'axe primaire et à l'axe secondaire.

Le premier engrenage peut comporter un premier pignon menant disposé sur l'arbre primaire et un premier pignon mené disposé sur l'arbre tertiaire, le premier pignon menant, respectivement le premier pignon mené, étant monté fou sur l'arbre primaire, respectivement sur l'arbre tertiaire, et étant apte à être couplé en rotation à l'arbre primaire, respectivement à l'arbre tertiaire, par les moyens de couplage correspondants.

Dans ce cas, le premier pignon mené, respectivement le premier pignon menant, peut être solidaire et relié en permanence à l'arbre tertiaire, respectivement à l'arbre primaire.

Le deuxième engrenage peut comporter un deuxième pignon menant disposé sur l'arbre primaire et un deuxième pignon mené disposé sur l'arbre tertiaire, le deuxième pignon menant, respectivement le deuxième pignon mené, étant monté fou sur l'arbre primaire, respectivement sur l'arbre tertiaire, et étant apte à être couplé en rotation à l'arbre primaire, respectivement à l'arbre tertiaire, par les moyens de couplage correspondants.

Dans ce cas, le deuxième pignon mené, respectivement le deuxième pignon menant, peut être solidaire et relié en permanence à l'arbre tertiaire, respectivement à l'arbre primaire.

Le troisième engrenage peut comporter un troisième pignon menant disposé sur l'arbre secondaire et un troisième pignon mené disposé sur l'arbre tertiaire, le troisième pignon menant, respectivement le troisième pignon mené, étant monté fou sur l'arbre secondaire, respectivement sur l'arbre tertiaire, et étant apte à être couplé en rotation à l'arbre secondaire, respectivement à l'arbre tertiaire, par les moyens de couplage correspondants.

Dans ce cas, le troisième pignon mené, respectivement le troisième pignon menant, peut être solidaire et relié en permanence à l'arbre tertiaire, respectivement à l'arbre secondaire.

Le deuxième pignon mené et le troisième pignon mené peuvent être formés par le même pignon, de manière à réduire la complexité et le coût du dispositif de transmission.

L'arbre primaire, l'arbre secondaire et/ou l'arbre tertiaire peuvent comporter un dispositif de verrouillage de l'arbre.

Un tel dispositif de verrouillage peut être activé de façon à bloquer l'arbre correspondant et empêcher sa rotation en cas d'arrêt ou de stationnement du véhicule par exemple.

Les moyens de couplage peuvent comporter au moins un crabot ou au moins un synchroniseur, apte à activer l'engrenage concerné.

Dans le cas d'un synchroniseur, l'engrenage peut être activé lorsque la vitesse de rotation de l'arbre concerné atteint une vitesse de consigne.

En variante ou en complément, les moyens de couplage peuvent également comporter un embrayage à friction, par exemple un embrayage multidisques humide.

Un palier support peut être situé à chaque extrémité de l'arbre primaire, de l'arbre secondaire et/ou de l'arbre tertiaire.

Un différentiel peut être relié à l'arbre tertiaire par l'intermédiaire d'un engrenage de différentiel, ledit différentiel étant apte à être relié aux roues du véhicule.

Le différentiel autorise les roues motrices du véhicule à tourner à des vitesses différentes lors du passage d'une courbe ou d'un virage. Les roues situées à l'extérieur du virage peuvent alors tourner plus vite que celles situées à l'intérieur du virage.

La première machine électrique peut présenter des caractéristiques techniques inférieures à la deuxième machine électrique.

Les caractéristiques techniques peuvent concerner la puissance nominale de la première machine électrique et la puissance nominale de la deuxième machine électrique.

Les caractéristiques techniques peuvent concerner le couple nominal de la première machine électrique et le couple nominal de la deuxième machine électrique.

Plusieurs rapports de vitesses peuvent être associés à la première machine électrique. La deuxième machine électrique peut alors être apte à compenser une rupture de couple lors du changement de rapport de vitesses sur la première machine électrique.

L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1 est une vue schématique d'un dispositif de transmission de couple selon une première forme de réalisation de l'invention,
- la figure 2 est une vue schématique d'un dispositif de transmission de couple selon une deuxième forme de réalisation de l'invention,
- la figure 3 est une vue schématique d'un dispositif de transmission de couple selon une troisième forme de réalisation de l'invention,
- la figure 4 est une vue schématique d'un dispositif de transmission de couple selon une quatrième forme de réalisation de l'invention,
- la figure 5 est une vue schématique d'un dispositif de transmission de couple selon une cinquième forme de réalisation de l'invention,
- la figure 6 est une vue schématique d'un dispositif de transmission de couple selon une sixième forme de réalisation de l'invention.

Sur toutes les figures, les éléments ayant des fonctions identiques portent les mêmes numéros de référence.

Les réalisations suivantes sont des exemples. Bien que la description se réfère à plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées pour fournir d'autres réalisations.

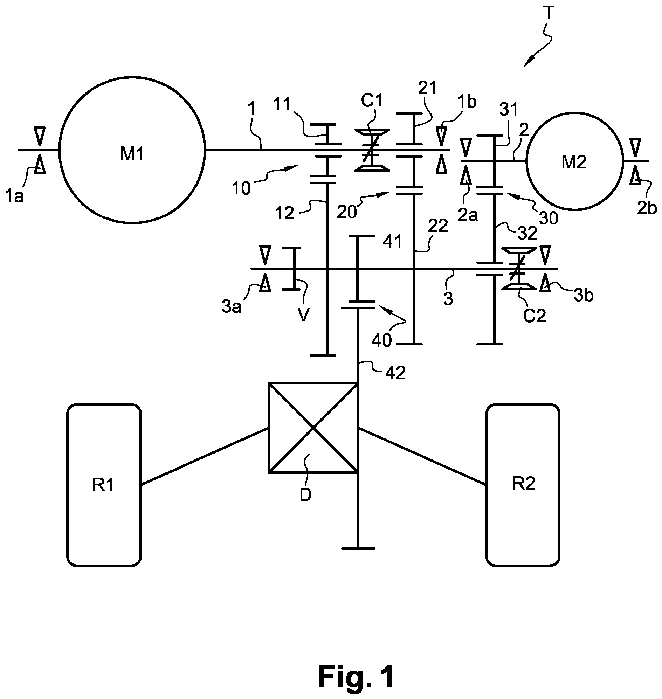

En relation avec les figures 1 à 6, on observe les éléments essentiels d'une chaine cinématique de véhicule propulsé par une première machine électrique M1 et une seconde machine électrique M2, reliées aux roues R1, R2 du véhicule par l'intermédiaire d'un dispositif de transmission T. Le dispositif de transmission T fait office de réducteur entre les machines électriques M1, M2 et les roues R1, R2 du véhicule, c'est-à-dire qu'il a pour but de modifier le rapport de vitesses et/ou de couple entre l'arbre de sortie de la machine électrique M1, M2 concernée et les roues R1, R2 du véhicule.

Chaque machine électrique M1, M2 peut être par exemple être une machine électrique synchrone à aimants permanents fonctionnant à basse tension, en particulier une tension comprise entre 30 et 60 Volts, par exemple de l'ordre de 48 Volts pour au moins l'une des machines électriques M1, M2.

La première machine électrique M1 présente des caractéristiques techniques différentes de la deuxième machine électrique M2.

Les caractéristiques techniques de chaque machine électrique peuvent notamment être l'une ou plusieurs des caractéristiques suivantes : la tension d'alimentation, le courant nominal, la puissance nominale, le nombre de phases, le nombre de pôles, le rapport de la vitesse de rotation sur la tension d'alimentation, la vitesse de rotation nominale, le couple nominal, l'inertie du rotor, le courant maximal, la vitesse de rotation maximale, le couple maximal, le rendement, le type d'aimant permanent utilisé, les dimensions, la masse.

Le dispositif de transmission T de la figure 1 comprend un arbre primaire 1 qui est formé par l'arbre de sortie de la première machine électrique M1.

En variante, l'arbre primaire 1 peut être accouplé à l'arbre de sortie de la première machine électrique M1. Cet accouplement est alors homocinétique et peut être tout type d'accouplement mécanique entre deux arbres, comme par exemple un accouplement avec cannelures.

Le dispositif de transmission T comprend également un arbre secondaire 2 qui est formé par l'arbre de sortie de la deuxième machine électrique M2.

En variante et comme précédemment, l'arbre secondaire 2 peut être accouplé à l'arbre de sortie de la deuxième machine électrique M2. Cet accouplement est alors homocinétique et peut être tout type d'accouplement mécanique entre deux arbres, comme par exemple un accouplement avec cannelures.

Le dispositif de transmission T comprend par ailleurs un arbre tertiaire 3. L'arbre tertiaire 3 est apte à être relié à un différentiel D lui-même relié aux roues R1, R2 du véhicule.

Un premier engrenage 10 correspondant à un premier rapport de transmission comprend un premier pignon menant 11 disposé sur l'arbre primaire 1 et un premier pignon mené 12 disposé sur l'arbre tertiaire 3. Le premier pignon menant 11 et le premier pignon mené 12 engrènent en permanence.

Un deuxième engrenage 20 correspondant à un second rapport de transmission comprend un deuxième pignon menant 21 disposé sur l'arbre primaire 1 et un deuxième pignon mené 22 disposé sur l'arbre tertiaire 3. Le deuxième pignon menant 21 et le deuxième pignon mené 22 engrènent en permanence.

Le premier pignon menant 11 et le deuxième pignon menant 21 sont montés fous sur l'arbre primaire 1, par l'intermédiaire de roulements à aiguilles, et peut ainsi tourner par rapport à l'arbre primaire 1.

Le premier pignon mené 12 et le deuxième pignon mené 22 sont solidaires de l'arbre tertiaire 3.

Le rapport de réduction entre le premier pignon menant 11 et le premier pignon mené 12 peut par exemple être compris entre 5 et 2.

Le rapport de réduction entre le deuxième pignon menant 21 et le deuxième pignon mené 22 peut par exemple être compris entre 3,5 et 1.

Un troisième engrenage 30 correspondant à un troisième rapport de transmission comprend un troisième pignon menant 31 disposé sur l'arbre secondaire 2 et un deuxième pignon mené 32 disposé sur l'arbre tertiaire 3. Le deuxième pignon menant 31 et le deuxième pignon mené 32 engrènent en permanence.

Le troisième pignon menant 31 est solidaire de l'arbre secondaire 2. Le troisième pignon mené 32 est monté fou sur l'arbre tertiaire 3, par l'intermédiaire de roulements à aiguilles, et peut ainsi tourner par rapport à l'arbre tertiaire 3.

Le rapport de réduction entre le troisième pignon menant 31 et le troisième pignon mené 32 peut par exemple être compris entre 5 et 1,5.

Un quatrième engrenage correspondant à un engrenage 40 de différentiel D comprend un quatrième pignon menant 41 disposé sur l'arbre tertiaire 3 et un quatrième pignon mené 42 correspondant à l'entrée du différentiel D. Le quatrième pignon menant 41 est monté fixe sur l'arbre tertiaire. Le quatrième pignon menant 41 et le quatrième pignon mené 42 engrènent en permanence.

Le rapport de réduction entre le quatrième pignon menant 41 et le quatrième pignon mené 42 peut par exemple être compris entre 5 et 2,5.

Les quatre engrenages 10, 20, 30, 40 sont orientés de manière parallèle. De la même manière, les trois arbres 1, 2, 3 sont orientés de manière parallèle. Les différents pignons 11, 12, 21, 22, 31, 32, 41, 42 sont des pièces distinctes les unes des autres, dans la forme de réalisation illustrée à la figure 1, et ont des dentures droites. En variante, ces pignons peuvent avoir des dentures obliques, hélicoïdales ou à chevrons.

Deux chemins de couple sont donc possibles entre l'arbre de sortie de la première machine électrique M1 et les roues R1, R2 du véhicule. Un premier chemin de couple passe par le premier engrenage 10 puis l'engrenage 40 de différentiel D. Un deuxième chemin de couple passe par le deuxième engrenage 20 puis l'engrenage 40 de différentiel D.

Un autre chemin de couple passant par le troisième engrenage 30 et l'engrenage 40 de différentiel D permet de relier la deuxième machine électrique M2 et les roues R1, R2 du véhicule.

La première machine électrique M1 peut être utilisée seule, ou en complément de la deuxième machine électrique M2, afin de déplacer le véhicule. En particulier, la première machine électrique M1 peut être utilisée seule lorsque le couple requis est inférieur à un couple déterminé, la seconde machine électrique M2 pouvant par exemple être utilisée lorsque le couple requis est supérieur audit couple déterminé.

La deuxième machine électrique M2 peut ainsi être utilisée moins fréquemment que la première machine électrique M1, ce qui explique notamment le fait que la seconde machine électrique M2 peut présenter des caractéristiques techniques différentes de la première machine électrique M1, tel par exemple qu'un rendement plus faible, qu'un couple nominal ou maximal plus faible, ou encore des dimensions réduites.

Afin de sélectionner le chemin de couple approprié en fonction notamment des conditions de conduite (montée, descente, conduite sur autoroute, conduite, urbaine...), des dispositifs de couplage C1, C2 sont disposés dans le dispositif de transmission T afin de sélectionner le chemin de couple approprié passant par le premier engrenage 10, par le deuxième engrenage 20 ou par le troisième engrenage 30.

En particulier, un premier dispositif de couplage C1 est disposé sur l'arbre primaire 1 et permet d'activer sélectivement le premier engrenage 10 ou le deuxième engrenage 20, et de désactiver sélectivement le deuxième engrenage 20 ou respectivement le premier engrenage 10.

Un deuxième dispositif de couplage C2 permet d'activer ou de désactiver le troisième engrenage 30, indépendamment du premier dispositif de couplage C1.

Chaque dispositif de couplage C1, C2 est ici formé par un crabot ou un synchroniseur.

Le premier dispositif de couplage C1 est monté sur l'arbre primaire 1 et est positionné axialement entre le premier pignon menant 11 et le deuxième pignon menant 21. Le premier dispositif de couplage C1 permet de verrouiller soit le premier pignon menant 11, soit le deuxième pignon menant 21, sur l'arbre primaire 1. Le verrouillage intervient par exemple lorsque la vitesse de rotation du premier pignon menant 11 ou du deuxième pignon menant 21 est égale ou proche de la vitesse de rotation de l'arbre primaire 1.

Le deuxième dispositif de couplage C2 est monté sur l'arbre tertiaire 3 et permet de verrouiller le troisième pignon mené 32. Le verrouillage intervient par exemple lorsque la vitesse de rotation du troisième pignon mené 32 est égale ou proche de la vitesse de rotation de l'arbre tertiaire 3.

L'actionnement des dispositifs de couplage C1, C2 peut être piloté en fonction par exemple des conditions de fonctionnement (vitesse du véhicule, couple requis). Le pilotage des dispositifs de couplage C1, C2 peut être réalisé par un calculateur embarqué dans le véhicule. Ledit calculateur peut également être utilisé afin de piloter l'alimentation des machines électriques M1, M2.

L'arbre tertiaire est par ailleurs équipé d'un dispositif de verrouillage V apte à bloquer ledit arbre tertiaire 3 en cas d'arrêt ou de stationnement du véhicule par exemple.

Le stator de chaque machine électrique M1, M2 peut être fixé sur un boîtier du dispositif de transmission T par tout moyen de fixation, par exemple des vis. L'arbre primaire 1, l'arbre secondaire 2 et l'arbre tertiaire 3 sont chacun supportés par des paliers situés à chacune des extrémités des arbres.

En particulier, l'arbre primaire 1 est supporté par les paliers 1a et 1b, l'arbre secondaire 2 est supporté par les paliers 2a et 2b, et l'arbre tertiaire 3 est supporté par les paliers 3a et 3b. Chacun de ces paliers se présente sous la forme d'un roulement à billes ayant une bague interne en contact avec l'arbre 1, 2, 3 et une bague externe logée dans le boitier du dispositif de transmission T.

L'arbre primaire 1 comporte axialement, du palier 1a vers le palier 1b, la machine électrique M1, le premier pignon menant 11, les moyens de couplage C1 et le deuxième pignon menant 21.

L'arbre secondaire 2 comporte axialement, du palier 2a vers le palier 2b, le troisième pignon menant 31 et la deuxième machine électrique M2. Les palier 1b et 2a sont proches l'un de l'autre tandis que les paliers 1a et 2b sont éloignés l'un de l'autre.

L'arbre tertiaire 3 comporte axialement, du palier 3a vers le palier 3b, le dispositif de verrouillage V, le premier pignon mené 12, le quatrième pignon menant 41, le deuxième pignon mené 22, le troisième pignon mené 32 et les deuxièmes moyens de couplage C2.

Dans la forme de réalisation illustrée à la figure 1, les machines électriques M1 et M2 sont situées axialement de part et d'autre des engrenages 10, 20, 30 et/ou 40.

En fonctionnement, les moyens de pilotage permettent de sélectionner le ou les chemins de couple à appliquer et actionnent les moyens de couplage C1 et C2 en conséquence.

Le premier chemin de couple permettant de transférer le couple de la première machine électrique M1 aux roues R1, R2, par l'intermédiaire du premier engrenage 10 et du quatrième engrenage 40 peut être utilisé pour une faible vitesse d'avance du véhicule, par exemple pour une vitesse inférieure à 90 km/h. Un tel cas de fonctionnement peut notamment se présenter au démarrage du véhicule ou lors d'une montée.

Le deuxième chemin de couple permettant de transférer le couple de la première machine électrique M1 aux roues R1, R2, par l'intermédiaire du deuxième engrenage 20 et du quatrième engrenage 40 peut être utilisé pour une vitesse élevée d'avance du véhicule, par exemple pour une vitesse supérieure ou égale à 30 km/h. Un tel cas de fonctionnement peut notamment se présenter lors d'une conduite sur route du véhicule.

Le troisième chemin de couplage permettant de transférer le couple de la deuxième machine électrique M2 aux roues R1, R2, par l'intermédiaire du troisième engrenage 30 et du quatrième engrenage 40 peut être utilisé, seul ou de préférence en complément du premier chemin de couple ou du deuxième chemin de couple.

L'utilisation du troisième chemin de couple en complément du premier chemin de couple ou du deuxième chemin de couple permet d'augmenter le couple total transmis aux roues R1, R2. Par voie de conséquence, il est possible d'optimiser le dimensionnement des première et deuxième machines électriques M1, M2 de façon à répondre aux différents cas de fonctionnement tout en limitant les coûts d'un tel dispositif de transmission.

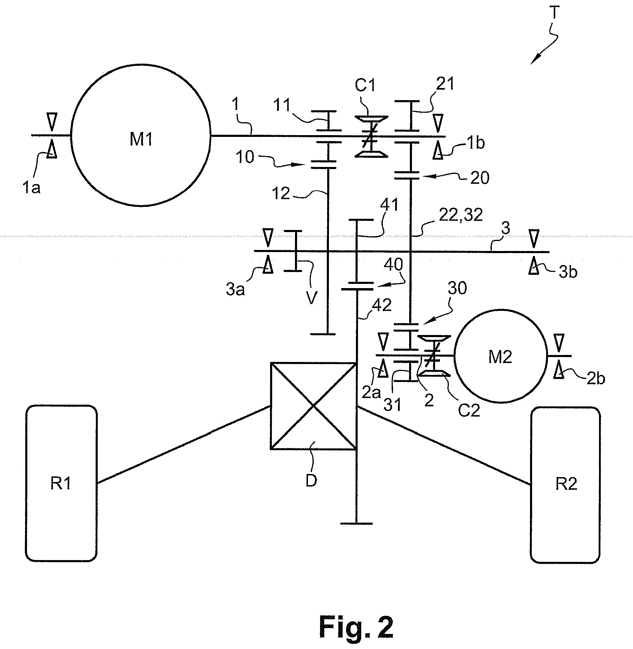

La figure 2 illustre un dispositif de transmission selon une deuxième forme de réalisation de l'invention, qui diffère de la forme de réalisation décrite en référence à la figure 1 en ce que le troisième pignon menant 31 est monté fou sur l'arbre secondaire 2 et en ce que le troisième pignon 32 mené et le deuxième pignon mené 22 forment un seul et même pignon, solidaire de l'arbre tertiaire 3. Dans cette forme de réalisation également, le deuxième dispositif de couplage C2 est monté sur l'arbre secondaire 2 et permet de verrouiller le troisième pignon menant 31. Le verrouillage intervient par exemple lorsque la vitesse de rotation du troisième pignon menant 31 est égale ou proche de la vitesse de rotation de l'arbre secondaire 2.

Une telle forme de réalisation permet de limiter le nombre de pignons utilisés, et donc de réduire le coût et la masse du dispositif de transmission T. Une telle forme de réalisation permet également de limiter l'encombrement axial.

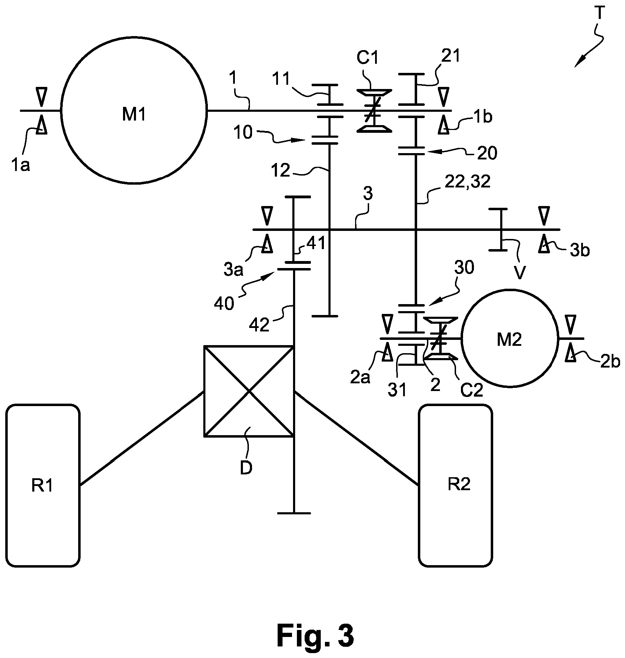

La figure 3 illustre une troisième forme de réalisation, qui diffère de celle décrite en référence à la figure 2 en ce que le quatrième pignon menant 41 est situé axialement entre le palier 3a et le premier pignon mené 12. Par ailleurs, le dispositif de verrouillage V est disposé axialement entre le deuxième pignon mené 22 (formant également le troisième pignon mené 32) et le palier 3b.

Une telle forme de réalisation peut permettre de faciliter les opérations d'assemblage.

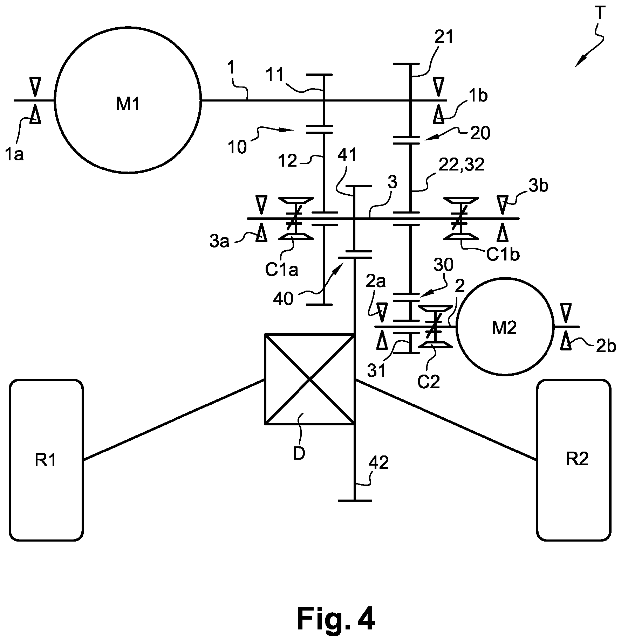

La figure 4 illustre une quatrième forme de réalisation, qui diffère de celle décrite en référence à la figure 2 en ce que le premier pignon menant 11 et le deuxième pignon menant 21 sont solidaires de l'arbre primaire 1 et en ce que le premier pignon mené 12 et le deuxième pignon mené 22 sont montés fous sur l'arbre tertiaire 3. Dans cette forme de réalisation également, un dispositif de couplage C1a est monté sur l'arbre tertiaire 3 et est positionné axialement entre le palier 3a et le premier pignon mené 12, ledit dispositif de couplage C1a permettant de verrouiller le premier pignon mené 12 sur l'arbre tertiaire 3. Par ailleurs, un dispositif de couplage C1b est monté sur l'arbre tertiaire 3 et est positionné axialement entre le palier 3b et le deuxième pignon mené 22, ledit dispositif de couplage C1b permettant de verrouiller le deuxième pignon mené 22 sur l'arbre tertiaire 3. On rappelle que le deuxième pignon mené 21 forme également le troisième pignon mené 32.

En d'autres termes, le premier engrenage 10 peut être activé par le dispositif de couplage C1a, le deuxième engrenage 20 peut être activé par le dispositif de couplage C1b et le troisième engrenage 30 peut être activé par le dispositif de couplage C2.

On notera par ailleurs que l'activation simultanée des premier et deuxième engrenages 10, 20 par les dispositifs de couplage C1a, C1b, lorsque les rapports des engrenages 10 et 20 sont différents, permet d'empêcher la rotation de l'arbre tertiaire 3. Dans cette forme de réalisation, le dispositif de transmission T peut donc être dépourvu de dispositif de verrouillage V de l'arbre tertiaire.

Une telle forme de réalisation permet la suppression du dispositif de verrouillage.

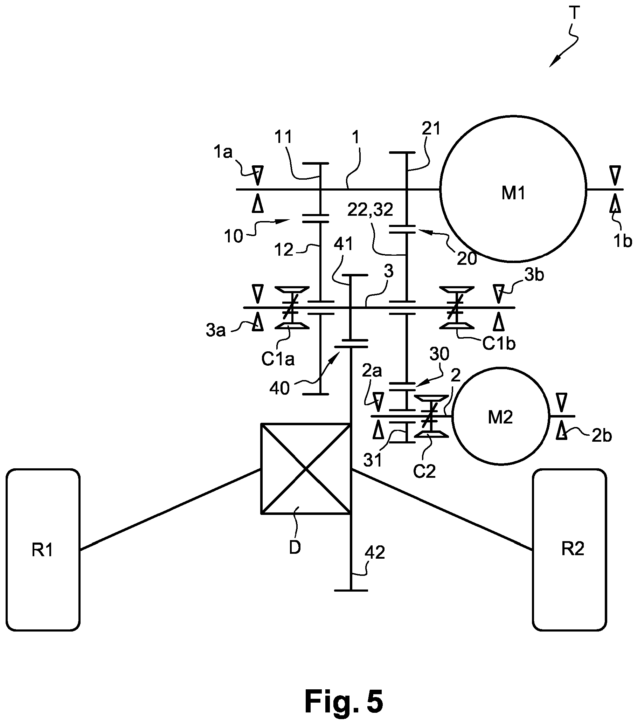

La figure 5 illustre une cinquième forme de réalisation, qui diffère de celle décrite en référence à la figure 4 en ce que la première machine électrique M1 est située axialement entre le deuxième pignon menant 21 et le palier 1b.

De manière plus générale, la position axiale de la première machine électrique M1 sur l'arbre primaire 1, ou la position axiale de la deuxième machine électrique M2 sur l'arbre secondaire 2, peut être modifiée en fonction des besoins, en particulier en fonction des spécifications en termes d'encombrement.

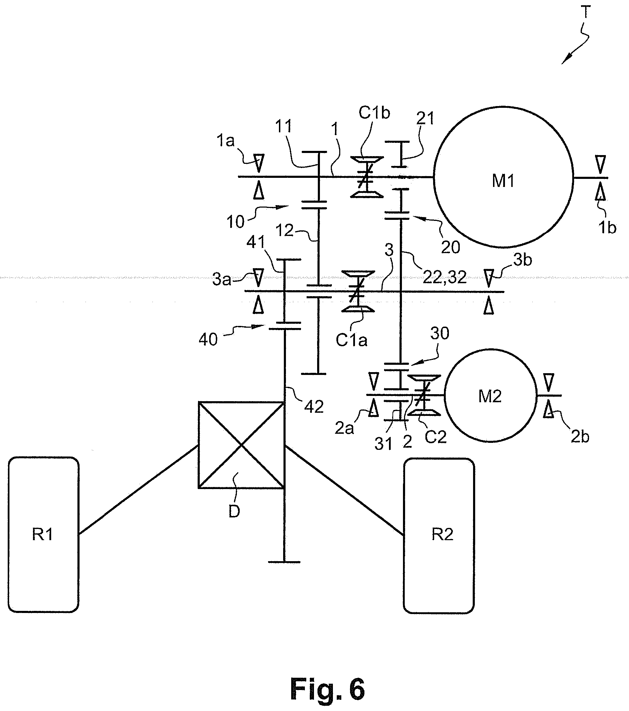

La figure 6 illustre une sixième forme de réalisation, qui diffère de celle décrite en référence à la figure 2 en ce que la première machine électrique M1 est située axialement entre le deuxième pignon menant 21 et le palier 1b. Par ailleurs, dans cette forme de réalisation, le premier pignon menant 11 est solidaire de l'arbre primaire 1 et le premier pignon mené 12 est monté fou sur l'arbre tertiaire 3. Le quatrième pignon menant 41 est situé axialement entre le palier 3a et le premier pignon mené 12.

De plus, dans la forme de réalisation de la figure 6, un dispositif de couplage C1a est monté sur l'arbre tertiaire 3 et est positionné axialement entre le premier pignon mené 12 et le deuxième pignon mené 22, ledit dispositif de couplage C1a permettant de verrouiller le premier pignon mené 12 sur l'arbre tertiaire 3. Par ailleurs, un dispositif de couplage C1b est monté sur l'arbre primaire 1 et est positionné axialement entre le premier pignon menant 11 et le deuxième pignon menant 21, ledit dispositif de couplage C1b permettant de verrouiller le deuxième pignon menant 21 sur l'arbre primaire 1.

En d'autres termes, le premier engrenage 10 peut être activé par le dispositif de couplage C1a, le deuxième engrenage 20 peut être activé par le dispositif de couplage C1b et le troisième engrenage 30 peut être activé par le dispositif de couplage C2.

On notera par ailleurs que l'activation des premier et deuxième engrenages 10, 20 par les dispositifs de couplage C1a, C1b, lorsque les rapports des engrenages 10 et 20 sont différents, permet notamment d'empêcher la rotation de l'arbre tertiaire 3. Dans cette forme de réalisation, le dispositif de transmission T peut donc être dépourvu de dispositif de verrouillage V de l'arbre tertiaire 3.

Une telle forme de réalisation permet la suppression du dispositif de verrouillage V et permet également de réduire l'encombrement axial.

## Revendications

1. Dispositif de transmission (T) à au moins deux rapports de transmission, notamment pour véhicule électrique, le dispositif de transmission (T) comprenant :
- une première machine électrique (M1) reliée à un arbre primaire (1),
- une deuxième machine électrique (M2) reliée à un arbre secondaire (2), la première machine électrique (M1) présentant des caractéristiques techniques différentes de la deuxième machine électrique (M2),
- un arbre tertiaire (3) relié à l'arbre primaire (1) et à l'arbre secondaire (2) par l'intermédiaire d'engrenages (10, 20, 30) correspondant auxdits rapports de transmission,
l'arbre primaire (1) et l'arbre tertiaire (3) étant aptes à être reliés par l'intermédiaire d'un premier engrenage (10) correspondant à un premier rapport de transmission ou par l'intermédiaire d'un deuxième engrenage (20) correspondant à un deuxième rapport de transmission, des moyens de couplage (C1, C1a, C1b) permettant de sélectionner ledit rapport de transmission en activant ou désactivant l'un ou l'autre desdits premier et deuxième engrenages (10, 20) ;
**caractérisé en ce que** l'arbre secondaire (2) et l'arbre tertiaire (3) sont aptes à être reliés par l'intermédiaire d'un troisième engrenage (30) correspondant à un troisième rapport de transmission.

2. Dispositif de transmission (T) selon la revendication 1, **caractérisé en ce que** l'activation simultanée du premier engrenage (10) et du deuxième engrenage (20) par les moyens de couplage (C1a, C1b) permet de bloquer le dispositif de transmission, notamment l'arbre tertiaire (3).

3. Dispositif de transmission (T) selon la revendication 1 ou 2, **caractérisé en ce qu'**il comporte des moyens de couplage (C2) aptes à activer ou désactiver le troisième engrenage.

4. Dispositif de transmission (T) selon l'une des revendications 1 à 3, **caractérisé en ce que** la première machine électrique (M1) et la deuxième machine électrique (M2) sont situées de part et d'autre des engrenages (10, 20, 30).

5. Dispositif de transmission (T) selon l'une des revendications 1 à 4, **caractérisé en ce que** la première machine électrique (M1) et la deuxième machine électrique (M2) sont situées d'un même côté par rapport aux engrenages (10, 20, 30).

6. Dispositif de transmission (T) selon l'une des revendications 1 à 5, **caractérisé en ce que** le premier engrenage (10) comporte un premier pignon menant (11) disposé sur l'arbre primaire (1) et un premier pignon mené (12) disposé sur l'arbre tertiaire (3), le premier pignon menant (11), respectivement le premier pignon mené (12), étant monté fou sur l'arbre primaire (1), respectivement sur l'arbre tertiaire (3), et étant apte à être couplé en rotation à l'arbre primaire (1), respectivement à l'arbre tertiaire (3), par les moyens de couplage correspondants (C1, C1a).

7. Dispositif de transmission (T) selon l'une des revendications 1 à 6, **caractérisé en ce que** le deuxième engrenage (20) comporte un deuxième pignon menant (21) disposé sur l'arbre primaire (1) et un deuxième pignon mené (22) disposé sur l'arbre tertiaire (3), le deuxième pignon menant (21), respectivement le deuxième pignon mené (22), étant monté fou sur l'arbre primaire (1), respectivement sur l'arbre tertiaire (3), et étant apte à être couplé en rotation à l'arbre primaire (1), respectivement à l'arbre tertiaire (3), par les moyens de couplage correspondants (C1, C1b).

8. Dispositif de transmission (T) selon l'une des revendications 1 à 7, **caractérisé en ce que** le troisième engrenage (30) comporte un troisième pignon menant (31) disposé sur l'arbre secondaire (2) et un troisième pignon mené (32) disposé sur l'arbre tertiaire (3), le troisième pignon menant (31), respectivement le troisième pignon mené (32), étant monté fou sur l'arbre secondaire (2), respectivement sur l'arbre tertiaire (3), et étant apte à être couplé en rotation à l'arbre secondaire (2), respectivement à l'arbre tertiaire (3), par les moyens de couplage correspondants (C2).

9. Dispositif de transmission (T) selon les revendications et 8, **caractérisé en ce que** le deuxième pignon mené (22) et le troisième pignon mené (32) sont formés par le même pignon.

10. Dispositif de transmission (T) selon l'une des revendications 1 à 9, **caractérisé en ce que** l'arbre primaire (1), l'arbre secondaire (2) et/ou l'arbre tertiaire (3) comportent un dispositif de verrouillage (V) de l'arbre.

11. Dispositif de transmission (T) selon l'une des revendications 1 à 10, **caractérisé en ce que** les moyens de couplage (C1, C1a, C1b, C2) peuvent comporter au moins un crabot ou au moins un synchroniseur, apte à activer l'engrenage (10, 20, 30) concerné.

12. Dispositif de transmission (T) selon l'une des revendications 1 à 11, **caractérisé en ce que** la première machine électrique (M) présente des caractéristiques techniques inférieures à la deuxième machine électrique (M2).

13. Dispositif de transmission (T) selon l'une des revendications 1 à 12, **caractérisé en ce que** les caractéristiques techniques concernent la puissance nominale de la première machine électrique (M1) et la puissance nominale de la deuxième machine électrique (M2), ou le couple nominal de la première machine électrique (M1) et le couple nominal de la deuxième machine électrique (M2).

## Patentansprüche

1. Getriebevorrichtung (T) mit mindestens zwei Übersetzungsverhältnissen, insbesondere für ein Elektrofahrzeug, wobei die Getriebevorrichtung (T) Folgendes beinhaltet:
- eine erste elektrische Maschine (M1), die mit einer Primärwelle (1) verbunden ist,
- eine zweite elektrische Maschine (M2), die mit einer Sekundärwelle (2) verbunden ist, wobei die erste elektrische Maschine (M1) technische Eigenschaften aufweist, die sich von der zweiten elektrischen Maschine (M2) unterscheiden,
- eine Tertiärwelle (3), die über Räderwerke (10, 20, 30), die den Übersetzungsverhältnissen entsprechen, mit der Primärwelle (1) und der Sekundärwelle (2) verbunden ist,
wobei die Primärwelle (1) und die Tertiärwelle (3) dazu fähig sind, über ein erstes Räderwerk (10), das einem ersten Übersetzungsverhältnis entspricht, oder über ein zweites Räderwerk (20), das einem zweiten Übersetzungsverhältnis entspricht, verbunden zu werden, wobei Kupplungsmittel (C1, C1a, C1b) es ermöglichen, das Übersetzungsverhältnis auszuwählen, indem sie das eine oder das andere des ersten und des zweiten Räderwerks (10, 20) aktivieren oder deaktivieren;
**dadurch gekennzeichnet, dass** die Sekundärwelle (2) und die Tertiärwelle (3) dazu fähig sind, über ein drittes Räderwerk (30), das einem dritten Übersetzungsverhältnis entspricht, verbunden zu werden.

2. Getriebevorrichtung (T) nach Anspruch 1, **dadurch gekennzeichnet, dass** das gleichzeitige Aktivieren des ersten Räderwerks (10) und des zweiten Räderwerks (20) durch die Kupplungsmittel (C1a, C1b) es ermöglicht, die Getriebevorrichtung, insbesondere die Tertiärwelle (3), zu blockieren.

3. Getriebevorrichtung (T) nach Anspruch 1 oder 2, **dadurch gekennzeichnet, dass** sie Kupplungsmittel (C2) umfasst, die dazu fähig sind, das dritte Räderwerk zu aktivieren oder zu deaktivieren.

4. Getriebevorrichtung (T) nach einem der Ansprüche 1 bis 3, **dadurch gekennzeichnet, dass** sich die erste elektrische Maschine (M1) und die zweite elektrische Maschine (M2) zu beiden Seiten der Räderwerke (10, 20, 30) befinden.

5. Getriebevorrichtung (T) nach einem der Ansprüche 1 bis 4, **dadurch gekennzeichnet, dass** sich die erste elektrische Maschine (M1) und die zweite elektrische Maschine (M2) in Bezug auf die Räderwerke (10, 20, 30) auf einer gleichen Seite befinden.

6. Getriebevorrichtung (T) nach einem der Ansprüche 1 bis 5, **dadurch gekennzeichnet, dass** das erste Räderwerk (10) ein erstes Antriebsritzel (11), das auf der Primärwelle (1) angeordnet ist, und ein erstes Abtriebsritzel (12), das auf der Tertiärwelle (3) angeordnet ist, umfasst, wobei das erste Antriebsritzel (11) bzw. das erste Abtriebsritzel (12) freibeweglich auf der Primärwelle (1) bzw. der Tertiärwelle (3) montiert ist und dazu fähig ist, durch die entsprechenden Kupplungsmittel (C1, C1a) mit der Primärwelle (1) bzw. mit der Tertiärwelle (3) drehgekoppelt zu werden.

7. Getriebevorrichtung (T) nach einem der Ansprüche 1 bis 6, **dadurch gekennzeichnet, dass** das zweite Räderwerk (20) ein zweites Antriebsritzel (21), das auf der Primärwelle (1) angeordnet ist, und ein zweites Abtriebsritzel (22), das auf der Tertiärwelle (3) angeordnet ist, umfasst, wobei das zweite Antriebsritzel (21) bzw. das zweite Abtriebsritzel (22) freibeweglich auf der Primärwelle (1) bzw. der Tertiärwelle (3) montiert ist und dazu fähig ist, durch die entsprechenden Kupplungsmittel (C1, C1b) mit der Primärwelle (1) bzw. mit der Tertiärwelle (3) drehgekoppelt zu werden.

8. Getriebevorrichtung (T) nach einem der Ansprüche 1 bis 7, **dadurch gekennzeichnet, dass** das dritte Räderwerk (30) ein drittes Antriebsritzel (31), das auf der Sekundärwelle (2) angeordnet ist, und ein drittes Abtriebsritzel (32), das auf der Tertiärwelle (3) angeordnet ist, umfasst, wobei das dritte Antriebsritzel (31) bzw. das dritte Abtriebsritzel (32) freibeweglich auf der Sekundärwelle (2) bzw. der Tertiärwelle (3) montiert ist und dazu fähig ist, durch die entsprechenden Kupplungsmittel (C2) mit der Sekundärwelle (2) bzw. mit der Tertiärwelle (3) drehgekoppelt zu werden.

9. Getriebevorrichtung (T) nach den Ansprüchen 7 und 8, **dadurch gekennzeichnet, dass** das zweite Abtriebsritzel (22) und das dritte Abtriebsritzel (32) durch das gleiche Ritzel gebildet sind.

10. Getriebevorrichtung (T) nach einem der Ansprüche 1 bis 9, **dadurch gekennzeichnet, dass** die Primärwelle (1), die Sekundärwelle (2) und/oder die Tertiärwelle (3) eine Vorrichtung zur Verriegelung (V) der Welle umfassen.

11. Getriebevorrichtung (T) nach einem der Ansprüche 1 bis 10, **dadurch gekennzeichnet, dass** die Kupplungsmittel (C1, C1a, C1b, C2) mindestens eine Klauenkupplung oder mindestens eine Synchronisiereinrichtung umfassen können, die dazu fähig ist, das betroffene Räderwerk (10, 20, 30) zu aktivieren.

12. Getriebevorrichtung (T) nach einem der Ansprüche 1 bis 11, **dadurch gekennzeichnet, dass** die erste elektrische Maschine (M) geringere technische Eigenschaften als die zweite elektrische Maschine (M2) aufweist.

13. Getriebevorrichtung (T) nach einem der Ansprüche 1 bis 12, **dadurch gekennzeichnet, dass** die technischen Eigenschaften die Nennleistung der ersten elektrischen Maschine (M1) und die Nennleistung der zweiten elektrischen Maschine (M2) oder das Nenndrehmoment der ersten elektrischen Maschine (M1) und das Nenndrehmoment der zweiten elektrischen Maschine (M2) betreffen.

## Claims

1. Transmission device (T) having at least two transmission ratios, in particular for an electric vehicle, the transmission device (T) comprising:
- a first electric machine (M1) connected to a primary shaft (1),
- a second electric machine (M2) connected to a secondary shaft (2), the first electric machine (M1) having technical features different from the second electric machine (M2),
- a tertiary shaft (3) connected to the primary shaft (1) and to the secondary shaft (2) by gears (10, 20, 30) corresponding to said transmission ratios,
the primary shaft (1) and the tertiary shaft (3) being able to be connected via a first gear (10) corresponding to a first transmission ratio or via a second gear (20) corresponding to a second transmission ratio, coupling means (C1, C1a, C1b) making it possible to select said transmission ratio by activating or deactivating one or the other of said first and second gears (10, 20);
**characterized in that** the secondary shaft (2) and the tertiary shaft (3) are able to be connected via a third gear (30) corresponding to a third transmission ratio.

2. Transmission device (T) according to Claim 1, **characterized in that** the simultaneous activation of the first gear (10) and of the second gear (20) by the coupling means (C1a, C1b) makes it possible to block the transmission device, in particular the tertiary shaft (3) .

3. Transmission device (T) according to Claim 1 or 2, **characterized in that** it has coupling means (C2) that are able to activate or deactivate the third gear.

4. Transmission device (T) according to one of Claims 1 to 3, **characterized in that** the first electric machine (M1) and the second electric machine (M2) are situated on either side of the gears (10, 20, 30).

5. Transmission device (T) according to one of Claims 1 to 4, **characterized in that** the first electric machine (M1) and the second electric machine (M2) are situated on one and the same side with respect to the gears (10, 20, 30) .

6. Transmission device (T) according to one of Claims 1 to 5, **characterized in that** the first gear (10) has a first drive pinion (11) disposed on the primary shaft (1) and a first driven pinion (12) disposed on the tertiary shaft (3), the first drive pinion (11) and the first driven pinion (12) being mounted to idle on the primary shaft (1) and on the tertiary shaft (3), respectively, and being able to be rotationally coupled to the primary shaft (1) and to the tertiary shaft (3), respectively, by the corresponding coupling means (C1, C1a).

7. Transmission device (T) according to one of Claims 1 to 6, **characterized in that** the second gear (20) has a second drive pinion (21) disposed on the primary shaft (1) and a second driven pinion (22) disposed on the tertiary shaft (3), the second drive pinion (21) and the second driven pinion (22) being mounted to idle on the primary shaft (1) and on the tertiary shaft (3), respectively, and being able to be rotationally coupled to the primary shaft (1) and to the tertiary shaft (3), respectively, by the corresponding coupling means (C1, C1b) .

8. Transmission device (T) according to one of Claims 1 to 7, **characterized in that** the third gear (30) has a third drive pinion (31) disposed on the secondary shaft (2) and a third driven pinion (32) disposed on the tertiary shaft (3), the third drive pinion (31) and the third driven pinion (32) being mounted to idle on the secondary shaft (2) and on the tertiary shaft (3), respectively, and being able to be rotationally coupled to the secondary shaft (2) and to the tertiary shaft (3), respectively, by the corresponding coupling means (C2).

9. Transmission device (T) according to Claims 7 and 8, **characterized in that** the second driven pinion (22) and the third driven pinion (32) are formed by the same pinion.

10. Transmission device (T) according to one of Claims 1 to 9, **characterized in that** the primary shaft (1), the secondary shaft (2) and/or the tertiary shaft (3) have a device (V) for locking the shaft.

11. Transmission device (T) according to one of Claims 1 to 10, **characterized in that** the coupling means (C1, C1a, C1b, C2) may have at least one jaw clutch or at least one synchronizer, which is able to activate the gear (10, 20, 30) in question.

12. Transmission device (T) according to one of Claims 1 to 11, **characterized in that** the first electric machine (M) has technical features lower than the second electric machine (M2).

13. Transmission device (T) according to one of Claims 1 to 12, **characterized in that** the technical features relate to the nominal output of the first electric machine (M1) and the nominal output of the second electric machine (M2), or the nominal torque of the first electric machine (M1) and the nominal torque of the second electric machine (M2).
